# EUROPEAN PATENT SPECIFICATION

(11) **EP 1 302 328 B1**
(45) Date of publication and mention of the grant of the patent: **28.03.2007**
(21) Application number: 02100041.9
(22) Date of filing: 18.01.2002
(51) Int. Cl.: B41J 29/393, H04N 1/60, H04N 1/58

(54) **Method to determine a characteristic of a printing system**
Verfahren zur Bestimmung einer Eigenschaft eines Drucksystems
Procédé pour déterminer une caractéristique d'un système d'impression

(30) Priority: 15.10.2001 EP 01203903
(43) Date of publication of application: 16.04.2003
(73) Proprietor: Agfa Graphics N.V., 2640 Mortsel (BE)
(72) Inventor: Livens, Stefan, 2640, Mortsel (BE); Bartels, Rudolf, 2640, Mortsel (BE)
(74) Representative: Goedeweeck, Rudi

(56) References cited:
- US-B1- 6 230 622
- US-B1- 6 233 061
- PATENT ABSTRACTS OF JAPAN vol. 014, no. 132 (M-0948), 13 March 1990 (1990-03-13) -& JP 02 003327 A (CANON INC), 8 January 1990 (1990-01-08)
- PATENT ABSTRACTS OF JAPAN vol. 2002, no. 02, 2 April 2002 (2002-04-02) -& JP 2001 270139 A (SEIKO EPSON CORP), 2 October 2001 (2001-10-02)

## Description

### FIELD OF THE INVENTION

The present invention relates to the field of image rendering by means of output devices, particularly multicolor proofing devices and more particularly multicolor ink-jet proofing devices; the invention especially concerns calibration of these devices, particularly ink limitation.

### BACKGROUND OF THE INVENTION

A "colorant" means in this document an independent variable with which an output device can be addressed. A "colorant value", denoted as c, is an independent value that can be used to control a colorant of the output device. The colorants of an offset printing press, for example, are the offset printing inks. It is customary to express the range of physically achievable values for the colorants of a device in %, which means that usually the colorant values range from c = 0 % to c = 100 %. In graphic arts, colorant values are often called dot percentages. An output device or printing device with n colorants, wherein n ≥ 1, will also be called below a "printer" or an "n-ink process". The output device may be a proofing device with a cyan (C), a magenta (M), a yellow (Y) and a black (K) colorant.

To put a color output device in a standard state, a calibration procedure is applied. In fact, an output device can drift away from its standard state; e.g. changes in room humidity or use of a fresh supply of ink may cause a printer to produce different color. The objective of device calibration, therefore, is to bring a device back to a known, standard state, so that it produces predictable color every time it receives the same input colorant values. To calibrate a printer, typically a calibration target is printed by the printer and measured. If the measurements indicate that the printer has drifted away from its standard state, calibration curves are calculated from the measurement results to correct for this drift. A calibration curve transforms a colorant value to another colorant value. We refer to patent application EP 1 083 739 for more information on calibration, color gamut and other relevant terms.

For some color output devices it is advantageous to apply ink limitation in the calibration step. In this way it is possible to reduce the influence of visually disturbing artifacts, that may occur if too much ink is laid down on the receiving substrate. For ink-jet printers for example, the ink can bleed significantly, especially if the receiving substrate upon which the ink is deposited is some low quality paper such as newsprint, i.e. paper used for newspapers. Bleeding normally gets more important with increasing colorant values, i.e. with increasing ink amounts. Other special effects such as coalescence may also be reduced or avoided by limiting the ink amount. All these visually disturbing effects are referred to in this document as "artifacts". On the other hand, for some printers there is no or no significant gamut increase beyond specific colorant values (the gamut is the delimited region in color space of the colors that are physically realizable by a given printer). Further, reducing the amount of ink decreases the drying time of the receiving substrate. Because of all these factors, applying ink limitation is important.

A problem is that, up to now, artifacts are evaluated manually on printouts see e.g. US 6233061 B1. This can be very time-consuming if the evaluation has to be repeated for many different ink limitation settings. Therefore, an improved method is needed. Moreover, JP 02003327 A shows a printer printing a trial dot comprising optical dot diameter analysing means and automatic blurring rate determining means.

### SUMMARY OF THE INVENTION

The present invention is a method and system as claimed in respectively independent claims 1 and 10. Preferred embodiments of the invention are set out in the dependent claims. Preferably, a method in accordance with the invention is implemented by a computer program as claimed in claim 8.

The invention involves analyzing data from a pattern printed on a receiving substrate by a printing device. Based on the analysis, an artifact characteristic of the printing device/receiving substrate combination, such as a bleeding characteristic, is automatically determined. In this document, an "artifact characteristic" means a characteristic that indicates if one or more types of artifacts, such as e.g. bleeding, are present, and possibly to what extent, for a specific printing mode (i.e. printing settings such as type of printer, type of receiving substrate, resolution, ink) and ink amounts. The printing device is preferably a proofing device, used e.g. for a newspaper proofing application.

An advantage of the invention is that the artifact characteristic is determined automatically, which is much less time-consuming than manual determination.

In a first embodiment of the invention, an ink amount of the printing device is selected and one or more artifact characteristics corresponding to the selected ink amount are automatically determined. Preferably, the ink amount is selected by a user and the corresponding artifact characteristic(s) are shown to the user, e.g. on a computer display, by a software application. A reduction of the ink amount usually decreases the artifacts but also reduces the color gamut, which is preferably as large as possible. Therefore, it is preferred that the color gamut corresponding to the selected ink amount is also determined. Preferably, both the artifact characteristic(s) and the gamut are shown to the user so that he can either accept or reject the selected ink amount. In a preferred embodiment, the user can interactively change the ink amounts of the printing device and automatically see the effect on the artifact characteristics on the one hand and on the gamut on the other hand. An advantage of the invention is that it allows a user to choose optimal ink limitation values while taking into account the effect of the limitation on both artifacts and gamut.

In a second embodiment of the invention, an ink limitation is not determined interactively but it is determined automatically, based on the analysis of the data from the printed pattern. The ink limitation may be determined by taking into account the artifact characteristics that correspond to different values of the ink amount that is to be limited. The corresponding gamut may also be taken into account.

Another embodiment of the invention is a system comprising a printing device, analyzing means and determining means. A pattern is printed on a receiving substrate by the printing device and data from the pattern are analyzed by the analyzing means. The analyzing means may be a measurement device such as an X-Rite DTP41 spectrophotometer. Based on the analysis, an artifact characteristic of the printing device/receiving substrate combination is determined automatically by the determining means. The determining means may be implemented by a computer and a computer program for the computer. In a specific embodiment, the analyzing means is incorporated in the printing device.

Preferred embodiments of a system in accordance with the invention may include features of a method - as claimed or as described above or below - in accordance with the invention.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 shows an embodiment of a pattern 10 as used in the invention and an image 30;
Fig. 2 shows a user interface of a computer program implementing an embodiment of the invention.

### DETAILED DESCRIPTION OF THE INVENTION

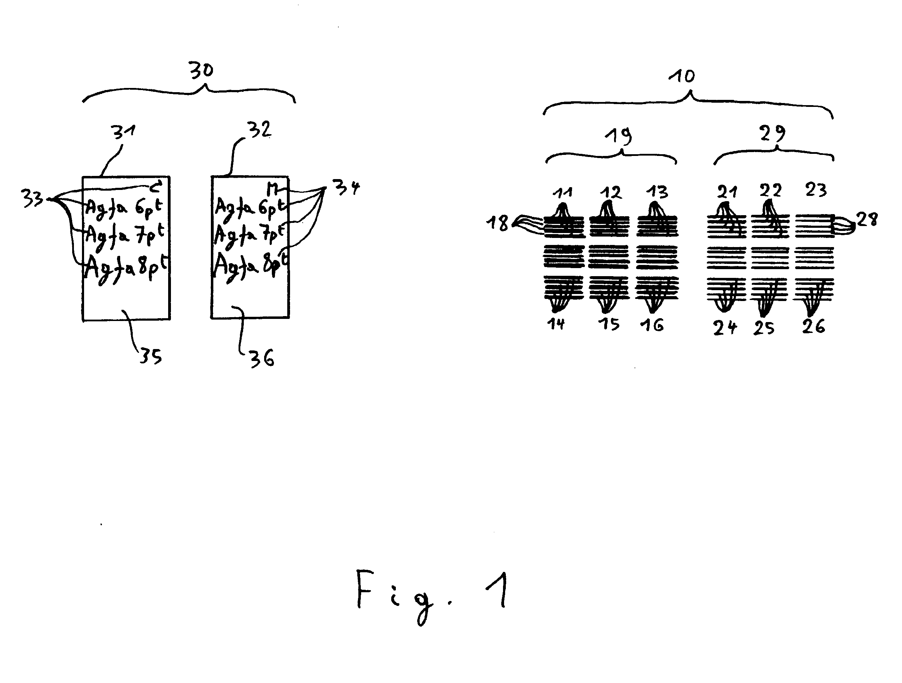

Fig. 1 shows a preferred embodiment of a pattern 10 used in the present invention. In a preferred embodiment of the invention, this pattern 10 is used as follows. It is printed by the printing device on the receiving substrate, e.g. a newsprint. The printed pattern 10 is then measured colorimetrically and the measurements are used to determine an artifact characteristic, such as a bleeding characteristic. The measured quantities may include CIE lightness L*, CIE chroma C* or both; preferably CIE chroma C* is measured for yellow and CIE lightness L* for the other colors. The printed pattern 10 includes sets of lines 11 - 16 and 21 - 26. To print such a pattern on a receiving substrate, a digital image representing the pattern is sent to the printing device. The digital image consists of pixels; some pixels make up a line of the pattern and other pixels make up white space between the lines. When the pattern 10 is printed on the receiving substrate, the printed image does not correspond exactly to the original digital image representing the pattern because of artifacts such as bleeding. Especially when printing with an ink-jet printer on some low quality paper such as newsprint, the ink can bleed significantly, so that the width (and the length) of the printed lines is larger than the width (and length) of the lines that would exactly correspond to the original digital image. Thus, in the printed pattern 10 of Fig. 1, the amount of white space 18 between the lines 11, when compared to the amount of white space (expressed in pixels for example) in the original digital image, is an indication of the extent of bleeding.

So as to be able to analyze the effect of the ink amount on bleeding, the preferred embodiment of pattern 10 shown in Fig. 1 contains sets of lines printed with different ink amounts, with different colors and with different amounts of white space between the lines of different sets. Pattern 10 includes a first set of lines 11 with a first amount of white space 18 between them and a second set of lines 23 with a second amount of white space 28 between them. The first amount of white space 18 in the printed image corresponds to a first number of pixels between the lines in the original digital image and the second amount of white space 28 corresponds to a second number of pixels between the lines in the original digital image, so that the first number of pixels is different from the second number of pixels. Usually, in the printed image, the first amount of white space 18 is also different from the second amount of white space 28. Pattern 10 contains a first group 19 of sets of lines 11 - 16 printed with the first number of pixels between the lines and a second group 29 of sets of lines 21 - 26 printed with the second number of pixels between the lines. In Fig. 1, nine sets of lines of group 15 are shown, of which six are indicated by reference signs (11 - 16). Lines 11 are printed in cyan, lines 12 in magenta, lines 13 in yellow; a specific amount of ink, e.g. c = 60 %, is used for these sets of lines. Lines 14 are printed in cyan, lines 15 in magenta, lines 16 in yellow, but using a different amount of ink, e.g. c = 80 %. Preferably, group 19 includes line patterns printed in the three primary colors (C, M, Y) and the three secondary colors (CM, i.e. blue; CY, i.e. green; MY, i.e. red) for a plurality of ink amounts, e.g. for c = 10 %, c = 20 %, and so on until c = 100 % in steps of 10 %, i.e. ten line patterns per color, and thus a total of sixty line patterns, all printed with the first number of pixels between the lines. Group 29 preferably contains the same sixty line patterns as group 19 but now printed with the second number of pixels between the lines. Pattern 10 preferably contains more than two groups, e.g. six groups of line patterns, that all have a different number of pixels between the lines.

Typically, very dark black cannot be achieved on newsprint. In order to obtain a reasonably dark black on newsprint, the amount of black ink is preferably not limited by more than a very small amount, even if further limitation would reduce artifacts. Therefore, it may be more efficient not to determine a bleeding characteristic for black (K) when printing on newsprint.

A way to automatically determine an artifact characteristic, such as a bleeding characteristic, by analyzing printed pattern 10, is as follows.

In a first preliminary step, that was done only once, on a set of a large number of receiving substrates (e.g. different types of newsprint) images such as a negative text image 30 shown in Fig. 1 were printed with different colors and for different printing modes and different ink amounts. Printing negative text image 30 by means of ink-jet means that inside contours 31, 32 ink is deposited on the receiving substrate in the complete areas 35, 36 except at the locations of the text 33, 34. After printing of the images, a visual assessment was made of the bleeding effect in these images; e.g., for the negative text image 30, it was visually determined at what ink amount, e.g. c = z %, the transition occurred from still "open" negative text, i.e. well readable text, to "closed" negative text, i.e. badly readable text due to bleeding, and this for a given font and point size. A pattern such as line pattern 10 was printed on the same set of receiving substrates, and the printed patterns were measured. At the transition ink amount of z %, a change in the measurement values was looked for; such a change may be e.g. a considerable increase or decrease of a measured value. This change was then stored. This was done for a wide range of different printing modes and ink amounts. In this way, a correlation was established between the measurement values of the printed pattern 10 and the visual assessments of the printed images 30.

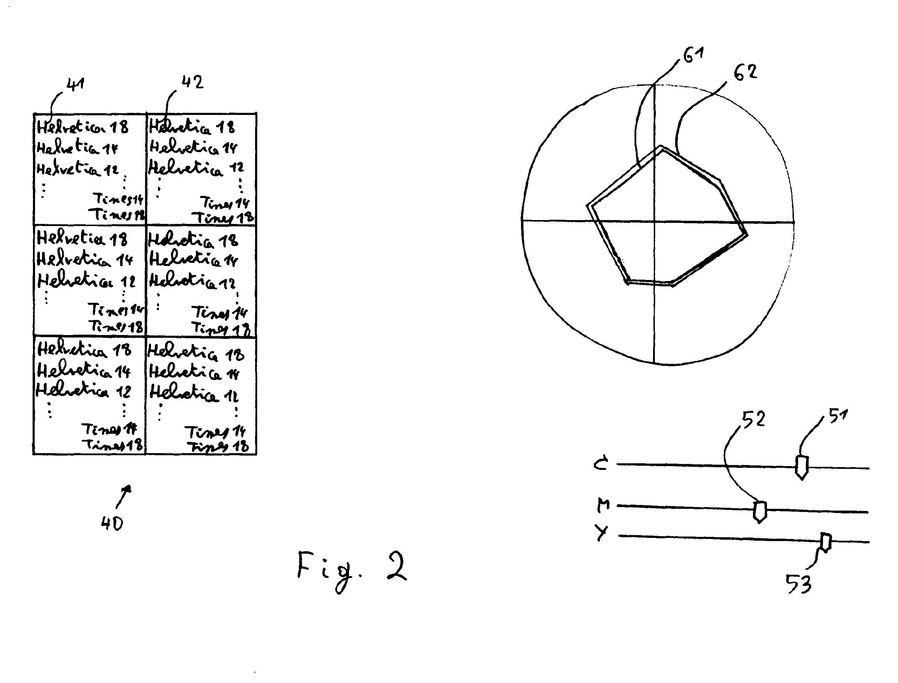

The visual assessment may be quantified by a visual acceptance scale. Such a visual acceptance scale may range e.g. from 0 to 5 with the visual acceptance value 0 corresponding to very disturbing artifacts and the value 5 indicating no artifacts at all. Preferably, instead of presenting the visual acceptance value to a user, the effect of the artifact is simulated by showing an image to the user, such as the image 30 with negative text, that is degraded with the corresponding acceptance value. Such a degraded image is shown in Fig. 2 and is discussed further below.

After this first preliminary step, an artifact characteristic, such as a bleeding characteristic, can be determined automatically. Pattern 10 is printed by a user on a specific type of receiving substrate. Measurements are done and the kind of changes in the measurement values that were stored in the preliminary step are looked for. Usually, such a change will occur at a different value of the parameter where the change occurred in the preliminary step, e.g. at an ink amount c = y %, wherein y is different from the previously determined transition ink amount of z % (this means that the transition from still open negative text to closed negative text, indicating bleeding, will occur at c = y % for the specific type of receiving substrate used). In this way, by analyzing data originating from the printed pattern, and by using the correlation as established above between visual assessments and measurement values, it can be determined, for a given ink amount, if bleeding is present and to what extent. By applying this method to another artifact characteristic than bleeding, the artifact characteristic can thus be determined automatically from analyzing data originating from the printed pattern.

In the first embodiment of the invention described already above, an ink amount of the printing device is selected and one or more artifact characteristics corresponding to the selected ink amount are automatically determined. Preferably, this is done as follows. A user interface as shown in Fig. 2 is displayed to a user on a computer display. The user interface includes switches 51, 52, 53 for setting the amounts of respectively cyan, magenta and yellow ink. For example, when switch 51 is positioned by the user completely to the right, this means an ink amount of 100 % cyan, while the extreme left position of switch 51 corresponds to 0 % of cyan ink. The user selects amounts of ink by means of the switches 51, 52 and 53. Then, for these selected ink amounts, the computer program implementing the invention determines the artifact characteristic, e.g. the bleeding characteristic, according to the method discussed above. The computer program then represents the bleeding characteristic in a way that is easy to interpret. The bleeding is represented by showing a degraded image 40 on the computer display; the image 40 is degraded in accordance with the amount of bleeding that corresponds to the ink amounts selected by the user. In Fig. 2, degraded image 40 includes negative text 41, 42 in various sizes and fonts (such as Helvetica and Times) in the primary (C, M, Y) and secondary colors (red, green, blue) colors. The user can interactively change the ink amounts by means of switches 51, 52, 53 and he immediately sees the corresponding bleeding effect on the display, on image 40. Preferably, the gamut corresponding to the ink amounts selected by the user is also determined, as known in the art, and shown. In Fig. 2, the gamut 61 of the printing device is visualized as a projection (in the a*b*-plane of CIELAB space) on top of the gamut 62 of the process that the printing device is to proof. Thus, the user immediately sees the effect of the limitation of ink amounts on both bleeding and gamut. Preferably, the computer program includes a wizard that verifies if the selected ink amounts are valid and that corrects them if necessary. An example of such a correction is a reduction of a selected ink amount that was too high, e.g. a selected ink amount equal to the maximum physically realizable ink amount. Such a too high ink amount is reduced in order to provide sufficient "headroom", so that the ink amount can still be increased later on, to allow compensation of print variations.

This system gives the user the best tools to make a guided choice in the trade-off between gamut and visual artifacts. Once a choice has been made, the associated data may be stored, e.g. by saving them to a file. These data are then used to determine the standard state of the printing device for the concerned printing mode, i.e. for calibration.

In the second embodiment of the invention described already above, the ink limitation to avoid artifacts is not determined interactively but automatically, based on the analysis of data originating from the printed pattern, and by using the correlation as established above between visual assessments and measurement values.

Both in the first and in the second embodiment, the data associated to the determined ink limitation may be stored. These data are then used for calibration. It is preferred that the data include aim values of one or more calibration curves, expressed e.g. as a value of CIE lightness L* or CIE chroma C*.

The same set of data may be used for remotely located printing devices, e.g. for remote proofing.

Usually, each printing mode will have a specific set of data.

The invention is not limited to the embodiments discussed above. The disclosed method can be applied to bleeding and to other artifacts. The disclosed method may be applied to newsprint and to other types of receiving substrate. The printed pattern 10 may be a line pattern, a step wedge, another image. The pattern may comprise sub-images that are printed with different ink combinations. The ink combinations are not limited to the combinations disclosed above. For a CMYK printer, the ink combination may comprise the primary colors (C, M, Y, possibly K), the secondary colors (red, green, blue), overlaps of cyan, magenta and yellow, other color combinations. The effect of ink limitation on the artifact characteristic, on the printer gamut, or on both, may be evaluated with respect to the 1-ink processes only, also with respect to other ink combinations such as the secondary colors, and even overlays of three or more colors may be taken into account.

Those skilled in the art will appreciate that numerous modifications and variations may be made to the embodiments disclosed above without departing from the scope of the present invention as claimed.

### List of reference signs

- 10 :: pattern
- 11 - 16 :: line
- 21 - 26 :: line
- 18, 28 :: white space
- 19, 29 :: group
- 30 :: printed image
- 31, 32 :: contour
- 33, 34 :: text
- 35, 36 :: area
- 40 :: simulated degraded image
- 41, 42 :: text
- 51 - 53 :: switch
- 61, 62 :: gamut

## Claims

1. A method for determining an artifact characteristic such as a bleeding characteristic of a printing system comprising a printing device and a receiving substrate, the method comprising a first preliminary step of establishing a correlation between measurement values corresponding to different print parameter values of a printed pattern (10) and visual assessments of the artifact characteristic in printed images (30), the method further comprising the steps of:
- printing a said print pattern (10) with different print parameter values on said receiving substrate by said printing device;
- analyzing data from said pattern (10) printed on said substrate by said printing device, said analysis using measurement values corresponding to the print parameter values of said printed pattern (10);
- automatically determining, based on said analysis and said correlation, said artifact characteristic of said printing system.

2. The method according to claim 1, wherein the print parameter is ink amount further comprising the step of:
- selecting a first ink amount value of said printing device;
- wherein said determination of said artifact characteristic is done so that said artifact characteristic corresponds to said first ink amount value.

3. The method according to claim 2, further comprising the step of:
- determining a gamut (61) of said printing system, said gamut (61) corresponding to said ink amount value.

4. The method according to claim 1, wherein the print parameter is ink amount further comprising the step of:
- automatically determining a limitation of the ink amount i.e. a second ink amount value of said printing device, based on said analysis and said correlation.

5. The method according to any one of the previous claims, wherein said pattern includes:
- a first line pattern having first lines (11) and a first amount of white space (18) between first lines; and
- a second line pattern having second lines (23) and a second amount of white space (28) between said second lines (23); and
- wherein said first amount of white space (18) is different from said second amount of white space (28).

6. The method according to anyone of the previous claims wherein said receiving substrate is newsprint.

7. A data processing system comprising means set up to execute and for carrying out the steps of the method according to any one of the claims 1 to 6.

8. A computer program comprising computer program code means adapted to perform the method according to any one of the claims 1 to 6 when said program is run on a computer.

9. A computer readable medium comprising program code adapted to carry out the method according to any one of the claims 1 to 6 when run on a computer.

10. A system comprising:
- a printing device for printing a pattern (10) on a receiving substrate;
- analyzing means for analyzing data from said pattern (10);
- determining means implemented by a computer and a computer program for the computer, the computer program comprising computer program code means adapted to perform the method according to any one of the claims 1 to 6 when said program is run on the computer, said determining means for automatically determining, based on said analysis and said correlation, said artifact characteristic of a combination of said printing devices and said receiving substrate.

## Patentansprüche

1. Verfahren zum Bestimmen einer Artefaktcharakteristik wie etwa einer Auslaufcharakteristik eines Drucksystems, umfassend eine Druckeinrichtung und ein aufnehmendes Substrat, wobei das Verfahren eine erste vorläufige Stufe des Herstellens einer Korrelation zwischen Meßwerten entsprechend verschiedenen Druckparameterwerten eines gedruckten Musters (10) und visueller Einschätzungen der Artefaktcharakteristik in gedruckten Bildern (30) umfaßt, wobei das Verfahren weiterhin die folgenden schritte umfaßt:
- Drucken eines besagten Druckmusters (10) mit unterschiedlichen Druckparameterwerten auf das empfangende Substrat durch die Druckeinrichtung;
- Analysieren von Daten von dem von der Druckeinrichtung auf das Substrat gedruckten Muster (10), wobei die Analyse Meßwerte entsprechend den Druckparameterwerten des gedruckten Musters (10) verwendet;
- automatisches Bestimmen der Artefaktcharakteristik des Drucksystems auf der Basis der Analyse und der Korrelation.

2. Verfahren nach Anspruch 1, wobei der Druckparameter Tintenmenge ist, weiterhin umfassend den Schritt:
- Auswählen eines ersten Tintenmengenwerts der Druckeinrichtung;
- wobei die Bestimmung der Artefaktcharakteristik so erfolgt, daß die Artefaktcharakteristik dem ersten Tintenmengenwert entspricht.

3. Verfahren nach Anspruch 2, weiterhin umfassend den Schritt:
- Bestimmen eines Gamut (61) des Drucksystems, wobei der Gamut (61) dem Tintenmengenwert entspricht.

4. Verfahren nach Anspruch 1, wobei der Druckparameter Tintenmenge ist, weiterhin umfassend den Schritt:
- automatisches Bestimmen einer Beschränkung der Tintenmenge, d.h. eines zweiten Tintenmengenwerts der Druckeinrichtung, auf der Basis der Analyse und der Korrelation.

5. Verfahren nach einem der vorhergehenden Ansprüche, wobei das Muster folgendes enthält:
- ein erstes Linienmuster mit ersten Linien (11) und einer ersten Menge an weißem Raum (18) zwischen ersten Linien; und
- ein zweites Linienmuster mit zweiten Linien (23) und einer zweiten Menge an weißem Raum (28) zwischen den zweiten Linien (23); und
- wobei die erste Menge an weißem Raum (18) von der zweiten Menge an weißem Raum (28) verschieden ist.

6. Verfahren nach einem der vorhergehenden Ansprüche, wobei das aufnehmende Substrat Zeitungsdruckpapier ist.

7. Datenverarbeitungssystem, umfassend Mittel, eingerichet zum Durchführen und Ausführen der Schritte des Verfahrens gemäß einem der Ansprüche 1 bis 6.

8. Computerprogramm, umfassend Computerprogrammcodemittel, ausgelegt zum Ausführen des Verfahrens nach einem der Ansprüche 1 bis 6, wenn das Programm auf einem Computer läuft.

9. Computerlesbares Medium, umfassend Programmcode, ausgelegt zum Durchführen des Verfahrens nach einem der Ansprüche 1 bis 6, wenn es auf einem Computer läuft.

10. System, umfassend:
- eine Druckeinrichtung zum Drucken eines Musters (10) auf ein empfangendes Substrat;
- Analysierurxgsmittel zum Analysieren von Daten aus dem Muster (10);
- von einem Computer und einem Computerprogramm für den Computer implementierte Bestimmungsmittel, wobei das Computerprogramm Computerprogrammcodemittel umfaßt, ausgelegt zum Ausführen des Verfahrens nach einem der Ansprüche 1 bis 6, wenn das Programm auf dem Computer läuft, wobei die Bestimmungsmittel die Artefaktcharakteristik einer Kombination aus den Druckeinrichtungen und dem empfangenen Substrat auf der Basis der Analyse und der Korrelation automatisch bestimmt.

## Revendications

1. Procédé de détermination d'une caractéristique d'artéfact, telle qu'une caractéristique de dégorgement, d'un système d'impression comprenant un dispositif d'impression et un substrat récepteur, le procédé comprenant une première étape préliminaire, dans laquelle on établit une corrélation entre des valeurs de mesures correspondant à différentes valeurs de paramètres d'impression d'un motif imprimé (10) et des évaluations visuelles de la caractéristique d'artéfact dans des images imprimées (30), le procédé comprenant en outre les étapes suivantes;
- impression d'un dit motif imprimé (10) avec différentes valeurs de paramètres d'impression sur ledit substrat récepteur par ledit dispositif d'impression;
- analyse de données dudit motif (10) imprimé sur ledit substrat par ledit dispositif d'impression, ladite analyse utilisant des valeurs de mesures correspondant aux valeurs de paramètres d'impression dudit motif imprimé (10); et
- détermination automatique, sur la base de ladite analyse et de ladite corrélation, de ladite caractéristique d'artéfact dudit système d'impression.

2. Procédé selon la revendication 1, dans lequel le paramètre d'impression est une quantité d'encre, comprenant en outre l'étape suivante :
- choix d'une première valeur de quantité d'encre dudit dispositif d'impression;
- dans lequel ladite détermination de ladite caractéristique d'artéfact est effectuée de sorte que ladite caractéristique d'artéfact corresponde à ladite première valeur de quantité d'encre.

3. Procédé selon la revendication 2, comprenant en outre l'étape suivante :
- détermination d'une gamme (61) dudit système d'impression, ladite gamme (61) correspondant à ladite valeur de quantité d'encre.

4. Procédé selon la revendication 1, dans lequel le paramètre d'impression est une quantité d'encre, comprenant en outre l'étape suivante :
- détermination automatique d'une limitation de la quantité d'encre, à savoir une deuxième valeur de quantité d'encre dudit dispositif d'impression, sur la base de ladite analyse et de ladite corrélation.

5. Procédé selon l'une quelconque des revendications précédentes, dans lequel ledit motif comprend :
- un premier motif de lignes ayant des premières lignes (11) et une première quantité d'espace blanc (18) entre les premières lignes; et
- un deuxième motif de lignes ayant des deuxièmes lignes (23) et une deuxième quantité d'espace blanc (28) entre lesdites deuxièmes lignes (23); et
- dans lequel ladite première quantité d'espace blanc (18) est différente de ladite deuxième quantité d'espace blanc (28).

6. Procédé selon l'une quelconque des revendications précédentes, dans lequel ledit substrat récepteur est du papier journal.

7. Système de traitement des données comprenant des moyens établis pour effectuer les étapes du procédé selon l'une quelconque des revendications 1 à 6.

8. Programme informatique comprenant des moyens de codage de programme informatique adaptés pour réaliser le procédé selon l'une quelconque des revendications 1 à 6, lorsque ledit programme tourne sur un ordinateur.

9. Support lisible sur ordinateur comprenant un code de programme adapté pour effectuer le procédé selon l'une quelconque des revendications 1 à 6 lorsqu'il tourne sur un ordinateur.

10. Système comprenant :
- un dispositif d'impression pour imprimer un motif (10) sur un substrat récepteur;
- un moyen d'analyse pour analyser des données dudit motif (10);
- un moyen de détermination mis en oeuvre par un ordinateur et un programme informatique pour l'ordinateur, le programme informatique comprenant un moyen de codage de programme informatique adapté pour effectuer le procédé selon l'une quelconque des revendications 1 à 6 lorsque ledit programme tourne sur l'ordinateur, ledit moyen de détermination permettant de déterminer automatiquement, sur la base de ladite analyse et de ladite corrélation, ladite caractéristique d'artéfact d'une combinaison desdits dispositifs d'impression et dudit substrat récepteur.
